**Europäisches Patentamt**

**European Patent Office**

**Office européen des brevets**

(11) Publication number: **0 071 189**
**A2**

## (12) EUROPEAN PATENT APPLICATION

(21) Application number: **82106614.9**

(22) Date of filing: **22.07.82**

(51) Int. Cl.³: **F 02 M 33/02**
**F 02 M 23/12, F 02 M 3/02**

(30) Priority: **27.07.81 US 286803**

(43) Date of publication of application:
**09.02.83 Bulletin 83/6**

(84) Designated Contracting States:
**AT BE CH DE FR GB IT LI LU NL SE**

(71) Applicant: **Waschkuttis, Gerhard**
**Waldstrasse 25**
**D-8510 Fürth(DE)**

(71) Applicant: **Mundorf, Walter**
**Luisenstrasse 127**
**D-5200 Siegburg(DE)**

(72) Inventor: **Waschkuttis, Gerhard**
**Waldstrasse 25**
**D-8510 Fürth(DE)**

(74) Representative: **Selting, Günther, Dipl.-Ing. et al,**
**Deichmannhaus am Hauptbahnhof**
**D-5000 Köln 1(DE)**

(54) Gasoline economizing device for internal combustion engines.

(57) A device for use in association with a carburetor (C) of the type used for supplying fuel at the intake manifold (M) of a gasoline internal combustion engine has an annular chamber (17) at the exit port of the carburetor (C), adapted to collect uncarbureted raw gasoline particles or globules for drainage through an external vaporizing system under the influence of the vacuum created at the intake manifold (M) during operation of the engine for reintroduction as vaporized fuel at the intake manifold (M), thereby converting raw gasoline, otherwise wastefully fed to the engine, into efficiently combustible fuel. The usual throttle butterfly valve (43) of the carburetor (C) is modified to provide a collection chamber (48) for raw gasoline which is continuously withdrawn through an axial passageway (45) in the butterfly valve pivotal axle (44) for drainage through the external vaporizing system.

FIG.2

# GASOLINE ECONOMIZING DEVICE FOR INTERNAL
## COMBUSTION ENGINES

The use of carburetors for vaporizing liquid gasoline supplied as fuel to internal combustion engines, particularly motor vehicle engines, has been commonplace for many years. Such carburetors depend, for the most part, on the use of needle valves and the like for atomizing the raw gasoline for mixture with air drawn into intake manifold for distribution to the combustion chambers of the engine. A butterfly valve in the air flow chamber of the carburetor is mechanically linked with an accelerator pedal (in automotive vehicles) to control engine speed or acceleration. One or more adjustable idler needle valves at the carburetor are utilized to supply gasoline vapor mist sufficient for idling the engine when the accelerator is at its minimal or "off" position. One of the deficiencies of such known carburetors resides in the fact that carburetion or atomization of the raw gasoline for efficient use as a gaseous fuel is often incomplete, for various reasons such as improper jet adjustment, erratic operation of the accelerator, and improper idler adjustment, for example. As a result, raw gasoline in the form of droplets or globules is drawn directly into the intake manifold without first having been converted to efficiently usable gaseous fuel. Such large particles or droplets of raw gasoline moreover, for the most part, form along the upper surface of the butterfly valve controlling acceleration, to drop from the periphery thereof, substantially at the peripheral inner surface at the exit port of the carburetor.

It is, accordingly, the principal object of this invention to recover such unvaporized droplets or globules of raw gasoline which would otherwise be drawn into intake manifold and wasted by unnecessarily and undesirably enriching the otherwise properly carbureted and vaporized gasoline, and converting such collected raw gasoline to vaporized fuel for addition to the properly carbureted gasoline vapor, thereby to achieve a more economic use of the gasoline being fed to the engine.

Another object of the invention is to provide a gasoline economizing attachment device for internal combustion engines which, when applied in the flow path between the exit port of a carburetor and intake port of the intake manifold of an internal combustion engine, traps unvaporized raw gasoline particles not vaporized by the carburetor for passage through an auxiliary vaporizing system controlled by the vacuum created at the intake manifold upon operation of the engine for introduction to the intake manifold as efficiently usable vaporized gasoline fuel.

Yet another object of the invention is to provide a collection chamber along a lower portion of the upper side of the carburetor throttle butterfly valve for the capture for withdrawal by vacuum through an axial passageway in the pivotal axle of the butterfly valve, and drainage into the external vaporizing system, of raw gasoline particles which might not otherwise be trapped by the attachment device, for processing into vapor.

Still another object of the invention is to provide mechanism for automatically controlling the carburetor idler needle valve for closure when not needed for maintaining idling, thereby further reducing the amount of raw gasoline ordinarily wasted under open throttle and engine acceleration conditions.

Another object is to provide a gasoline economizing device of the character described that is well adapted to use in kit form for installation on a carburetor and between a carburetor and its associated intake manifold for substantially economizing on gasoline fuel usage and thereby achieving substantially increased miles-per-gallon vehicular performance.

Still other objects of the invention are to provide a gasoline economizing system of the above nature which will be simple in construction, easy to install, compact in size, inexpensive to manufacture and trouble-fee in operation.

Other objects, features and advantages of the invention will be apparent from the following description when read with reference to the accompanying drawings.

Brief Description of the Drawings

In the drawings, wherein like reference numerals denote corresponding parts throughout the several views:

Fig. 1 is an oblique view of an automotive vehicle carburetor equipped with a gasoline economizing attachment device embodying the invention;

Fig. 2 is a vertical cross-sectional view taken along the plane indicated at 2-2 of Fig. 1 in the direction of the arrows, on an enlarged scale;

Fig. 3 is a vertical cross-sectional view taken along the plane indicated at 3-3 of Fig. 2, in the direction of the arrows;

Fig. 4 is a horizontal cross-sectional view taken along the plane indicated at 4-4 of Fig. 2, in the direction of the arrows;

Fig. 5 is a transverse cross-sectional view taken along the plane indicated at 5-5 of Fig. 4, in the direction of the arrows;

Fig. 6 is a transverse cross-sectional view taken along the plane indicated at 6-6 of Fig. 4 in the direction of the arrows;

Fig. 7 is a vertical cross-sectional view taken along the plane indicated at 7-7 of Fig. 4 in the direction of the arrows and illustrating details of one of the auxiliary vaporizing chambers;

Fig. 8 is a separate oblique view, as seen from the upper side, of the carburetor butterfly valve assembly;

Fig. 9 is a separate oblique view, as seen from the lower side, of the carburetor butterfly valve assembly;

Fig. 10 is a partial, vertical, cross-sectional view of the carburetor throat, illustrating the automatic idler valve control mechanism;

Fig. 11 is an "exploded" view of the idler valve needle mechanism, shown separately;

Fig. 12 illustrates alternative use of a vacuum controlled mechanism for automatically actuating the needle valve;

Fig. 13 illustrates alternative use of a solenoid for automatically actuating the needle valve; and

Fig. 14 is a partial, vertical, cross-sectional view of the carburetor throat, illustrating a modified form of automatic idler valve control mechanism.

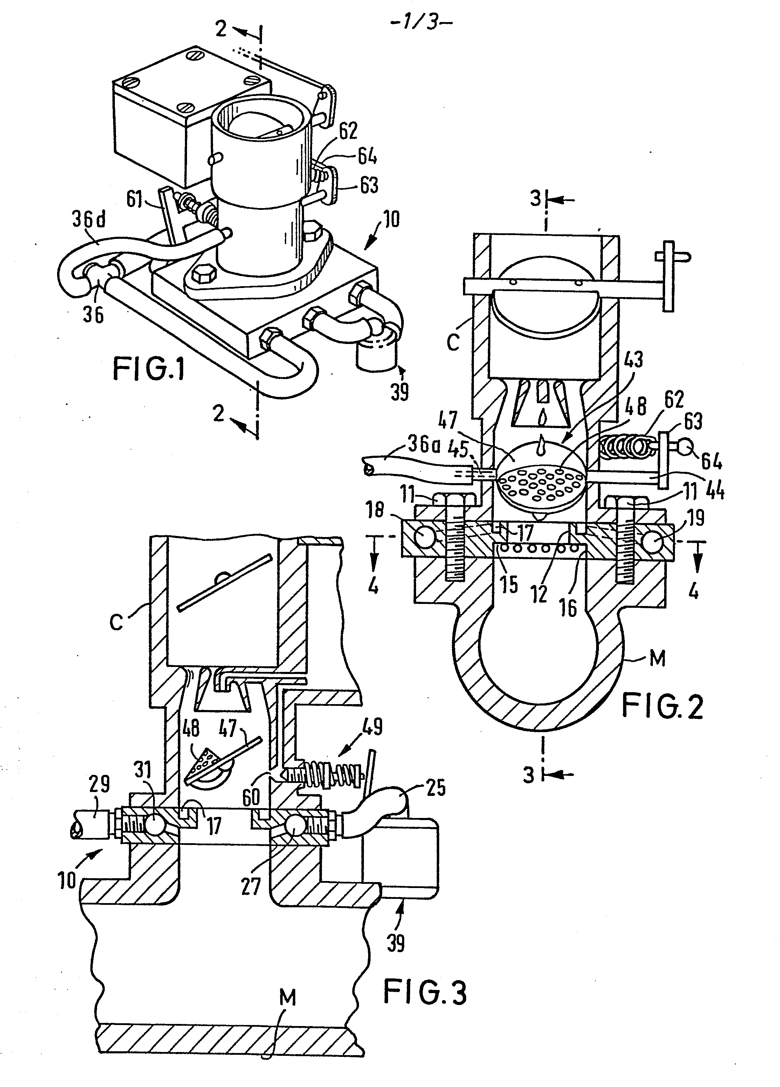

Referring now in detail to the drawings, reference numeral 10 indicates, generally, a preferred form of gasoline economizing device or system embodying the invention, part of which is shown installed as an insertion between a typical carburetor C and the associated intake manifold M (partially illustrated) of a gasoline internal combustion engine, and part of which constitutes modifications made to the carburetor. The attachment device 10, which may conveniently be fabricated of metal, is of rectangular shape, and will preferably be no more than one inch in thickness to enable compact installation between the mounting flange of the carburetor and the intake port or throat of the engine manifold with the usual attachment bolts 11, as best illustrated in Figs. 1 and 2. Attachment device 10 is provided with a circular through opening 12 and a pair of diametrically-opposed bolt openings 13,14, appropriately spaced at each side of said central through opening to align with the openings through which the carburetor attachment bolts 11 extend for attachment to the engine manifold M. The attachment device 10 may be fabricated either by machining or die casting of a suitable heat-resistant metal.

As illustrated in Figs. 2 through 6, the circular through opening 12, upon installation of the device, is concentric with the aligned outlet port of the carburetor C and intake port of the manifold M, and is of somewhat decreased diameter. It is defined by a decreased diameter portion 15 integrally formed intermediate the ends of concentric circularopening 16, said circular opening 16 having the same diameter as that of the intake port of the manifold M. The decreased diameter portion 15 is formed with an annular recess 17, at its upper end, the outer diameter of which is the same as, and concentric with, the outlet port of the associated carburetor C. Thus, raw or large unvaporized globules or droplets of gasoline passing through the throat of the carburetor especially at the interior peripheral zone thereof, will find their way into the annular recess 17 for re-processing and more economical use as a combustion fuel in the manner hereinafter more particularly described.

-6-

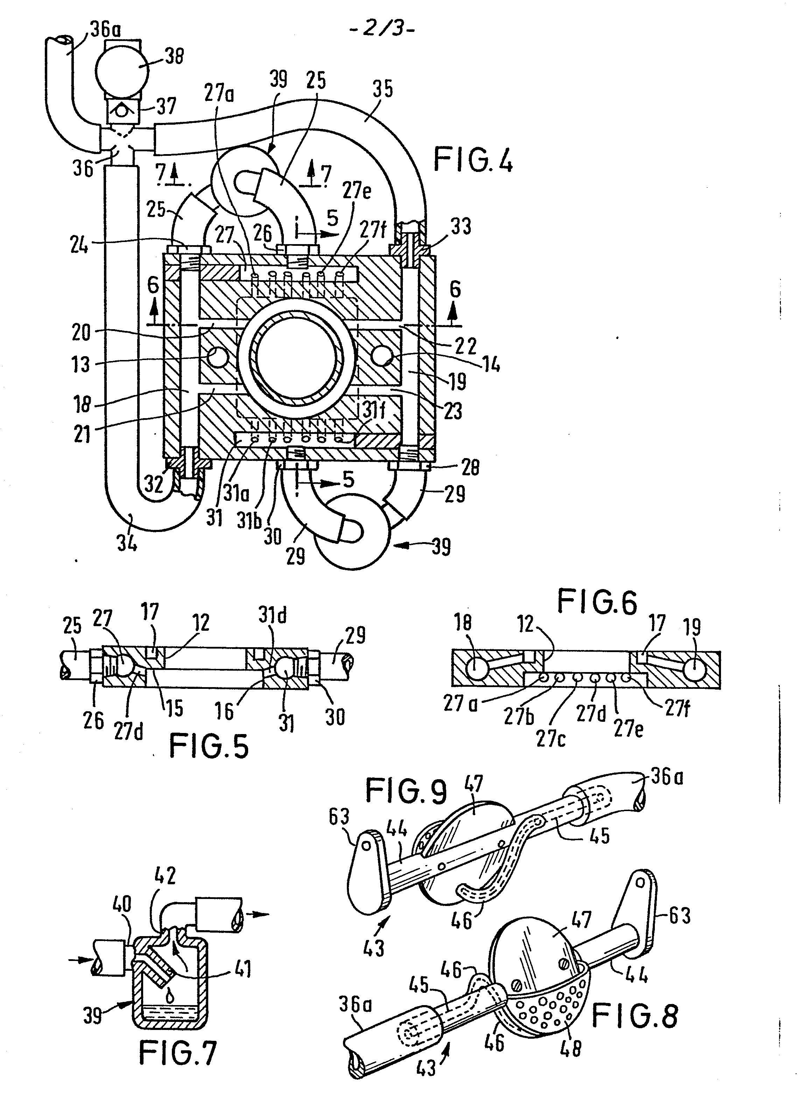

As illustrated in Figs. 2, 4 and 6, the attachment device 10 is provided with a pair of through bores 18, 19, in spaced, parallel relation and somewhat inwardly of each side. A pair of comparatively small-diameter, sidewardly-extending bores 20, 21 communicate between annular recess 17 and bore 18 at one side of the device; and a pair of sidewardly-extending bores 22,23 communicate between annular recess 17 and bore 19 at the other side. The rearward-most end of bore 18 is fitted with a nipple 24 connecting with a length of flexible tubing 25 communicating with a nipple 26, extending into an internal, sidewardly-extending rear bore 27 at a central position therealong. Connected in series with the length of tubing 25 is an auxiliary vaporizing chamber 39, the purpose and details of which are hereinafter more particularly described with reference to Fig. 7. The forward-most end of the bore 19 is likewise fitted with a nipple 28 connecting a length of flexible tubing 29 to an internal, sidewardly-extending front bore 31 at a central position therealong through nipple 30. An auxiliary vaporizing chamber 39 is similarly connected in series with the length of flexible tubing 29. A plurality, six in the embodiment illustrated, of comparatively small-diameter, spaced, parallel bores 27a through 27f communicate between back bore 27 and concentric central opening 16, at positions immediately below decreased-diameter portion 15. Similarly, six comparatively small-diameter, spaced , parallel bores 31a through 31f communicate between front bore 31 and the concentric central opening 16, at the opposite side thereof.

The remaining outer ends of the side bores 18, 19 are fitted with connector fittings or nipples 32, 33 for the attachment of lengths of flexible tubing 34,35 communicating with each other by means of a 4-way or cross fitting 36, one leg of which 4-way fitting is connected through check valve 37 to an air inlet valve 38, and the remaining leg of which is connected, through a length of tubing 36a, to the modified carburetor butterfly valve assembly 43.

It is possible to manually adjust the air inlet valve 38 to a defined passage cross section. In addition, said valve includes a (non-illustrated) movable element to enlarge the passage cross section if the accelerator pedal is pressed down. In other words, a system is provided which is responsive to the movement of the accelerator pedal and by which the passage cross section of the air inlet valve is always enlarged beyond the dimension set manually if the accelerator pedal is moved either forward or backward. Thus, also during the acceleration, the air supply is always adapted to the fuel supply by means of the accelerator pump to avoid temporary oversaturation of the fuel-air-mixture and to achieve a clean combustion.

As is best illustrated in Fig. 7, the auxiliary vaporizing chamber 39 is formed with an inlet nipple 40 extending into a downwardly-directed, interior nozzle portion 41, said nipple being connected with its associated length of flexible tubing as described above, and a nipple 42 communicating with the upper end of the chamber for connection with the same series-connected length of tubing. As further illustrated in Fig. 7, excess liquid gasoline not vaporized by air passage through the input length of flexible tubing, drops to the bottom of the chamber whereat, during periods of reduced inflow of gasoline, its vaporization for further efficient use as a cumbustion fuel is induced by the air stream jet directed down against the fluid gasoline surface by the interior nozzle portion 41.

In operation of the device, manual opening of the valve 38 permits air to be drawn into the bores 18, 19 for admixture with the raw of fluid gasoline flowing through small diameter bores 20, 21, 22 and 23, for discharge, upon conversion to gasoline vapor, into the inlet opening of the associated manifold M through multiple small diameter bores 27a through 27f, and 31a through 31f, under the influence of the vacuum created within the intake manifold during operation of the engine. Thus, as illustrated in Fig. 3, droplets or globules of uncarbureted gasoline which would otherwise flow directly into the intake manifold, resulting in wasteful fuel consumption such as occurs not only during "flooding" of the engine during cold starts but also during periods of acceleration, are captured in the annular recess 17. Fuel wastage is thus minimized with use of the present invention by reason of the capture for vaporization and reuse of the raw gasoline directed into the annular recess 17. In this connection, it will be understood that the carburetor butterfly valve controlling acceleration serves to direct excess liquid gasoline by gravity passage downwardly of its outer periphery, for the most part, and into the annular recess 17. As described above, the vacuum developed by operation of the engine and applied at the manifold ends of bores 27a through 27f and 31a through 31f induces a flow of air through air inlet valve 38 and check valve 37, over the excess raw gas passing through bores 18, 19, through the flexible lengths of tubing 25 and 29 and their series-connected auxiliary vaporizing chambers 39. During this air passage, the recovered liquid gasoline is vaporized for efficient use in engine combustion, thereby substantially increasing miles-per-gallon engine performance.

While the greater percentage of raw gasoline passing through the throat of the carburetor in the ordinary vehicular gasoline engine and flowing directly into the intake manifold is captured for efficient use by means of the above described attachment device 10, my economizing device or system contemplates further gasoline economy by capture of that small percentage of raw gasoline that might otherwise fall off the top side of the throttle butterfly valve and escape capture in the annula recess 17 of the attachment device 10. To this end, as is best illustrated in Figs. 1,2, 8 and 9 of the drawings, the usual carburetor C is provided with a modified butterfly valve assembly 43 differing from the usual valve assembly in that the pivotal axle 44 is provided at one end with an axial bore 45 communicating at the underside with an external length of small-diameter metal tubing 46, the distal end of which communicates with a small through opening in the circular butterfly valve plate 47 at the underside thereof at the lowermost position, i.e., that portion of the valve plate that turns down in the carburetor throat upon opening of the throttle when the accelerator is depressed. An upper side portion of the butterfly valve plate 47 has peripherally secured thereto a perforated, thin-metal partition member 48 defining a pocket within which raw gasoline droplets falling directly upon upper surface portions of the butterfly valve plate 47 drain and are captured for withdrawal through the length of tubing 36a. Such captured raw gasoline is, for the most part, drawn by vacuum into the attachment device 10 for vaporization and therefore efficient use in combustion as described above. Under conditions of heavy raw gasoline deposits on central portions of the upper surface of the circular butterfly valve plate 47, such as upon repeated acceleration, overflow of the butterfly mechanism pocket is avoided by the perforated nature of the partition member 48, the through openings thereof, although being very small to break up the otherwise large droplets of raw gasoline into small particles that are readily vaporized, being numerous enough to prevent such overflow. In this manner, most of that small portion of raw gasoline that might otherwise escape falling into the annular recess 17 of the attachment device 10, is captured for vaporization and efficient use in the attachment device as described above.

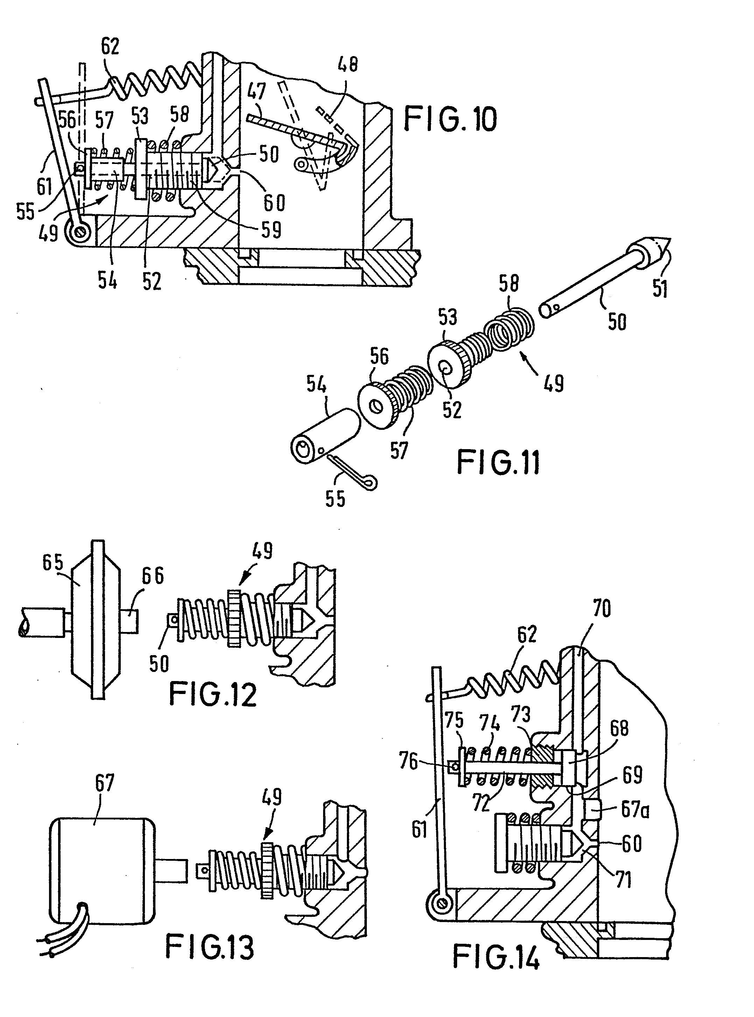

My economizing device or system contemplates still further gasoline economy by automatic control of the usual carburetor idler valve mechanism so that it permits the flow of gasoline into the throat of the carburetor only at such times when needed to maintain engine idling speed at proper RPM. To this end, as best illustrated in Figs. 10 and 11, the usual fixed adjustment idler needle valve assembly is replaced by a modified needle valve assembly 49 that is actuated for closure upon acceleration of the engine, i.e., when the throttle comprising the butterfly valve assembly 43 is partially or fully open.

The modified needle valve assembly 49 comprises a needle 50, one end of which is formed with an increased-diameter conical needle head portion 51 and the other end of which is received through an axial opening 52 in a headed adjustment screw 53 (Fig.11). The outwardly projecting end of the needle 50 extends through a sleeve 54 retained in place as by a cotter pin 55. A washer 56 surrounding the sleeve 54 and in abutment with cotter pin 55 constrains one end of a helical compression spring 57 circumjacent the sleeve 54, the other end of said spring being constrained against the outer surface of the head of adjusment screw 53. As illustrated in Fig. 10, a second helical spring 58 circumjacent the threaded shank portion of adjustment screw 53 bears against an outer surface portion of the carburetor housing surrounding the threaded opening 59 within which said adjustment screw is threaded, as in ordinary carburetors.

In use, the adjustment screw 53 is utilized to set the needle valve assembly at the desired setting for proper idling. It will be understood, however, that depression of the outer end of the needle 50 enables said needle to be moved forwardly against the resilient urging of helical spring 57, so that its conical needle head portion 51 can close or partially close the carburetor needle valve opening 60. Thus, a lever 61 pivotally fixed with respect to the carburetor housing and movable into abutment to the outer end of the needle 50 is operative, when moved between the full-line and broken-line representations thereof in Fig. 10, to close or partially close the carburetor needle valve opening 60. In accordance with one form of my invention, an outer end portion of the control lever 61 is linked to one end of a helical tension spring 62, the other end being linked to the usual butterfly valve control crank arm 63 at the end of the pivotal axle 44 thereof opposite the end with which the length of tubing 36a connects as described above. Thus, upon depression of the accelerator pedal and opening of the throttle for acceleration through the usual butterfly valve crank rod 64, the tension spring 62 will be drawn inwardly to move lever 61 into partially closing position of the modified idler needle valve assembly.

Figs. 12 and 13 illustrate modified methods of actuating the needle valve assembly 49 for partial or full closure under open throttle conditions. Fig. 12, by way of example, illustrates the use of a vacuum controlled actuator 65 having an abutment member 66 adapted to contact and depress the outer end of the needle 50 upon open throttle conditions due to increased vacuum being imposed upon said actuator during accelerating or open throttle conditions. The modification of Fig. 13 differs in that

-12-

a solenoid 67 is used as the actuating device, said solenoid being energized during open throttle conditions by an appropriate switch in the energization circuit which will be closed upon movement of the crank arm 63 in the throttle opening direction.

Fig. 14 illustrates a modification of the carburetor for minimizing wastage at the idler needle valve and injection port slit 67a found in most commonly used carburetors for idling purposes. This modification makes use of a piston 68 slidable within a transverse cylindrical opening 69 in the carburetor wall and transecting the usual carburetor gasoline passageway 70 leading to the slit 67 and the idling needle valve chamber 71. The piston 68 has a piston rod 72 extending through an externally-threaded sleeve 73 retaining the piston rod assembly in place for sliding reciprocation within the transverse cylindrical opening 69. The piston 68 is normally urged in its outward or non-actuated condition by an external helical compression spring 74 circumjacent said outer end of said piston rod and constrained between the outer surface of threaded sleeve 73 and the inner surface of a washer 75 secured in place such as by cotter pin 76. As described above in connection with the modification of the invention illustrated in Fig. 10, the control lever 61 may be actuated by a tension spring 62 upon opening of the throttle, whereupon the piston 68 will be moved forwardly to close off the supply of gasoline to both the slit 67a and the carburetor idler needle valve opening or port 60.

While I have illustrated and described herein only four forms in which my invention can conveniently be embodied in practice, it is to be understood that these embodiments are presented by way of example only, and not in

-13-

a limiting sense. For example, although the invention is described and illustrated in part as an attachment device, it could as well be incorporated as an integral part of an original carburetor, thereby substantially increasing carburetion efficiency with consequent increase in miles-per-gallon gasoline engine performance.

What I claim as new and desire to secure by Letters Patent is:

1. In a gasoline carburetor (C) for use with internal combustion engines having an intake manifold (M) for the induction of carbureted gaseous fuel into the combustion chambers of an engine, said carburetor (C) having a cylindrical air inlet flow chamber, a circular butterfly valve plate (47) in the flow chamber rotatable on a transverse axle (44) extending through and journalled with respect to the air inlet flow chamber, and a vaporized fuel exit port adapted for intercommunication connection with the engine intake manifold (M); the improvement comprising , means (48) for collecting raw gasoline particles falling upon the top of the circular butterfly valve plate (47), means for vaporizing said collected raw gasoline particles under the influence of the vacuum created in the internal combustion engine during its operation, and means (27,27a-27f; 31, 31a-31f) for reintroducing said collected raw gasoline particles as a gaseous mixture with air into the intake manifold (M) of the engine.

2. The invention as defined in claim 1 wherein said means for collecting raw gasoline particles falling upon the top of the circular butterfly valve plate (47) comprises a thin metal partition member (48) fixed against an upper side portion of the butterfly valve plate (47) and defining a pocket therewith into which raw gasoline particles falling directly upon upper surface portions of said butterfly valve plate (47) drain, and a first conduit means (45,46) communicating with said pocket and extending through the butterfly valve axle (44).

3. The invention as defined in claim 2 and further including means (17) for collecting additional raw gasoline particles passing through the carburetor exit port (16) near the inner periphery thereof, means for vaporizing said additionally collected raw gasoline particles under the influence of the vacuum created in the internal combustion engine during its operation, and means (27;31) for reintroducing said additionally collected raw gasoline as a gaseous mixture with air into the intake manifold (M) of the engine.

4. The invention as defined in claim 2 wherein said vaporizing means comprises a second conduit means (18;19) communicating between said first conduit means (27;31) and the intake manifold (M) of the engine , and means (34;35) for introducing air into said second conduit means (18;19) for admixture with raw gasoline fuel.

5. The invention as defined in claim 3, wherein said additional collecting means comprises an annular recess (17) adjacent the inner periphery of said carburetor exit port.

6. The invention as defined in claim 2 wherein said metal partition member (48) is perforated.

7. A gasoline economizing attachment device (10) for internal combustion engines comprising, in combination, a substantially flat housing member adapted for insertion between the exit port of a gasoline carburetor (C) and the intake port of the intake manifold (M) of a gasoline combustion engine, said housing member having a central through opening (16) for coaxial connection between the carburetor (C) and the intake manifold (M) for carbureted fuel flow therethrough, a raw gasoline collection recess (17) about the inner periphery of said housing through opening (16), flow path communicating means between said annular recess (17) and a plurality of openings (27a-27f; 31a-31f) below said annular recess (17), and means (34;35) for introducing air into said flow path communicating means controlled by the vacuum created in said intake manifold (M) upon operation of the engine, whereby raw gasoline collected in said annular recess (17) will be admixed with air in said flow path communicating means for the vaporization thereof and reintroduction as gaseous fuel through said plurality of openings (27a-27f; 31a-31f).

8. A gasoline economizing attachment device (10) as defined in claim 7, wherein said flow path communicating means comprises a vaporizing chamber (39) adapted to collect excess raw gasoline, and a nozzle (41) within said vaporizing chamber (39) directing a stream of the vacuum-moved air against the surface of said excess collected raw gasoline for inducing the vaporization thereof in said flow path communicating means.

9. A gasoline economizing attachment device (10) as defined in claim 7, wherein said flow path communicating means comprises a first plurality of bores (20,21) in said housing and communicating between said annular recess (17) and a through bore (18) in said housing, a second plurality of bores (27a-27f) opening at one end into said central housing through opening (16) below said annular housing recess (17), means further including an external length of tubing (25) communicating between one end of said through bore (18) and the inner ends of said second plurality of bores (27a-27f) and means (38) controlling the volume of air being drawn into said through bore (18) at the other end thereof under the influence of vacuum applied at said central through opening (16) in said housing member during the operation of the internal combustion engine.

10. A gasoline economizing attachment device (10) as defined in claim 9, wherein said air volume control means comprises a manually controllable valve (38).

11. A gasoline economizing attachment device (10) as defined in claim 10, including a check valve (37) connected series with said manually controllable valve (38) to inhibit the reverse flow of gaseous fluid therethrough.

12. A gasoline economizing attachment device (10) as defined in claim 7, comprising a third plurality of bores (22,23) in said housing communicating between said annular recess (17) and a second through bore (19) in said housing, a fourth plurality of bores (31a-31f) ʲopening at one end into said central housing through opening (16) below said housing annular recess (17), said flow path communicating means further including a second external length (29) of tubing communicating between one end of said second through bore (19) and the inner ends of said fourth plurality of bores (31a-31f), and means (38) controlling the volume of air being drawn into said through bores (19) at the other ends thereof under the influence of vacuum applied at said central through opening (16) of said housing member during operation of the internal combustion engine.

13. In a gasoline carburetor (C) for use with internal combustion engines having an intake manifold (M) for the induction of carbureted gaseous fuel into the combustion chambers of an engine, said carburetor (C) having a cylindrical air inlet flow chamber , a circular butterfly valve plate (47) in the flow chamber rotatable on a transverse axle (44) extending through and journalled with respect to the air inlet flow chamber, a needle valve (49) in the air inlet flow chamber, a raw gasoline injection port slit (60) in the air inlet flow chamber, and a vaporized fuel exit port adapted for intercommunication connection with the engine intake manifold (M); the improvement comprising, means (48) for collecting raw gasoline particles falling upon the top of the circular butterfly valve plate (47), means for vaporizing said collected raw gasoline particles under the influence of the vacuum created in the internal combustion engine during its operation, means (27;31) for reintroducing said collected raw gasoline particles as a gaseous mixture with air into the intake manifold (M) of the engine, and means (61) dependent upon the opening of the carburetor throttling butterfly valve (43) for automatically moving the needle valve (49) from open idling position to closed needle valve position.

14. In a gasoline carburetor (C) for use with internal combustion engines having an intake manifold (M) for the induction of carbureted gaseous fuel into the combustion chambers of an engine, said carburetor (C) having a cylindrical air inlet flow chamber, a circular butterfly valve plate (47) in the flow chamber rotatable on a transverse axle (44) extending through and journalled with respect to the air inlet flow chamber, a needle valve (49) in the air inlet flow chamber, a raw gasoline injection port slit (60) in the air inlet flow chamber, and a vaporized fuel exit port adapted for intercommunication connection with the engine intake manifold; the improvement comprising, means (48) for collecting raw gasoline particles falling upon the top of the circular butterfly valve plate (47), means for vaporizing said collected raw gasoline particles under the influence of the vacuum created in the internal combustion engine during its operation, means (27;31) for reintroducing said collected raw gasoline particles as a gaseous mixture with air into the intake manifold (M) of the engine, and means (61) dependent upon the opening of the carburetor throttling butterfly valve (43) for automatically closing the raw gasoline injection port slit.

15. The invention as defined in claim 14 wherein said needle valve moving means (61) comprises a helical tension spring (62) interconnecting a crank lever (63) affixed to the butterfly valve plate axle (44) and an outwardly projecting end of said needle valve (49).

16. The invention as defined in claim 14 wherein said needle valve moving means comprises an actuator (65) controlled by the vacuum created in the internal engine during its operation.

17. The invention as defined in claim 15 wherein said means for automatically closing the raw gasoline injection port slit (60) comprises a piston (68) one end of which is slidable transversely within the raw gasoline flow path (70) to said injection port slit (60).

18. The invention as defined in claim 17 wherein said means for automatically closing the raw gasoline injection port slit (60) further comprises a helical tension spring (62) interconnecting a crank lever (63) affixed to the butterfly valve plate axle (44) and the other end of said piston (68).

FIG.1

FIG.2

FIG.3

0071189

-2/3-

FIG.4

FIG.5

FIG.6

FIG.7

FIG.8

FIG.9

FIG.10

FIG.11

FIG.12

FIG.13

FIG.14